# EUROPÄISCHE PATENTANMELDUNG

(11) **EP 1 829 500 A1**
(43) Veröffentlichungstag der Anmeldung: **05.09.2007**
(21) Anmeldenummer: 07010328.8
(22) Anmeldetag: 17.01.2006
(51) Int. Cl.: A61C 19/00, A47L 9/22, A47L 9/28

(54) **Absaugvorrichtung, insbesondere Dentalabsaugvorrichtung**

(30) Priorität: 19.05.2005 DE 202005007823 U
(62) Teilanmeldung aus: 06000878.6
(71) Anmelder: Renfert GmbH, 78247 Hilzingen (DE)
(72) Erfinder: Rieger, Sören, Dr., 78247 Hilzingen (DE)
(74) Vertreter: Daub, Thomas

(57) **Zusammenfassung**

Die Erfindung geht aus von einer Absaugvorrichtung, insbesondere einer Dentalabsaugvorrichtung, mit wenigstens einer Motoreinheit (10) zum Antrieb eines Saugmittels (12).

Es wird vorgeschlagen, dass die Absaugeinheit eine einen Kleinlüfter (32) umfassende Strömungsmessvorrichtung aufweist.

## Beschreibung

### Stand der Technik

Die Erfindung geht aus von einer Absaugvorrichtung, insbesondere einer Dentalabsaugvorrichtung, nach dem Oberbegriff des Anspruchs 1.

Es sind Dentalabsaugvorrichtungen mit einer Motoreinheit zum Antrieb eines von einem Turbinenrad gebildeten Absaugmittels bekannt. Insbesondere Dentalabsaugvorrichtungen, und zwar speziell Zahntechnikdentalabsaugvorrichtungen, werden über einen Arbeitstag nahezu im Dauereinsatz betrieben.

Der Erfindung liegt insbesondere die Aufgabe zugrunde, eine kostenreduzierte Absaugvorrichtung bereitzustellen, die vorzugsweise dazu geeignet ist, zumindest nahezu im Dauereinsatz betrieben werden zu können. Sie wird gemäß der Erfindung jeweils durch die Merkmale der unabhängigen Patentansprüche gelöst. Weitere Ausgestaltungen ergeben sich aus den Unteransprüchen.

### Vorteile der Erfindung

Die Erfindung geht aus von einer Absaugvorrichtung, insbesondere von einer Dentalabsaugvorrichtung, mit wenigstens einer Motoreinheit zum Antrieb eines Saugmittels.

Es wird vorgeschlagen, dass die Absaugvorrichtung eine einen Kleinlüfter umfassende Strömungsmessvorrichtung aufweist. Dabei soll unter einem Kleinlüfter insbesondere eine Einheit mit einer Antriebseinheit und einem Lüftermittel verstanden werden. Kleinlüfter werden in hohen Stückzahlen mit einem hohen Automatisierungsgrad hergestellt, und zwar insbesondere für die Elektronikindustrie, wie beispielsweise zur Kühlung von CPUs in Personal Computern (PC), und sind dadurch besonders kostengünstig erhältlich. Aufgrund dessen werden vorzugsweise zum Einsatz in PCs vorgesehene Kleinlüfter eingesetzt. Ferner kann an der Antriebseinheit eines Kleinlüfters vorteilhaft ein Signal für eine Strömungsmessung, insbesondere zur Messung einer Strömungsgeschwindigkeit, abgegriffen werden.

Ist der Kleinlüfter in zumindest einem Betriebsmodus angetrieben, kann stets ein vorteilhaftes Signal abgegriffen werden, auch wenn beispielsweise keine Strömung in einem Hauptkanal strömt. Ferner kann insbesondere die Antriebseinheit für einen Selbsttest genutzt werden.

In einer weiteren Ausgestaltung wird vorgeschlagen, dass der Kleinlüfter teilweise von einer Hauptströmung abgeschirmt ist, beispielsweise indem dieser nur teilweise in einen Hauptströmungskanal ragt und/oder teilweise von einem Abschirmmittel abgedeckt ist, wodurch ein auf den Kleinlüfter treffender Strömungsanteil vorteilhaft abgestimmt werden kann.

Ist der Kleinlüfter in einer Motorlagereinheit angeordnet, können zusätzliche Lagermittel, Montageaufwand, Bauraum und Kosten eingespart werden.

Ferner wird vorgeschlagen, dass die Motoreinheit als eine von einem Endverbraucher austauschbare Einheit vorgesehen ist. Unter "vorgesehen" soll dabei insbesondere speziell "ausgestattet" und/oder "ausgelegt" verstanden werden. Ferner soll unter einer "von einem Endverbraucher austauschbaren Einheit" insbesondere eine Einheit verstanden werden, die unter Erfüllung zumindest einzelner und vorzugsweise sämtlicher Sicherheitsvorschriften des Produktions- und/oder Auslieferlands, wie insbesondere der Sicherheitsvorschriften der DIN, wie beispielsweise der DIN EN 61010-1, ausgetauscht werden kann. Durch eine entsprechende erfindungsgemäße Ausgestaltung können besonders kostengünstige Motoren, wie insbesondere Kollektormotoren, eingesetzt und damit Kosten eingespart werden.

Vorzugsweise umfasst die Motoreinheit ein Gehäuse und einen im Gehäuse angeordneten Elektromotor. Mit dem Gehäuse kann ein vorteilhafter Schutz, und zwar insbesondere ein vorteilhafter Berührschutz, erreicht werden, wie dieser vorzugsweise gemäß DIN, beispielsweise gemäß DIN EN 61010-1, definiert ist, bzw. es kann eine Berührbarkeit von "gefährlich aktiven Teilen" nach der DIN EN 61010-1 sicher verhindert werden.

Das Gehäuse kann dabei aus verschiedenen, dem Fachmann als sinnvoll erscheinenden Materialien hergestellt sein, vorteilhaft ist das Gehäuse jedoch zumindest teilweise und besonders vorteilhaft zumindest zu mehr als 80% aus Kunststoff, wodurch ein besonders kostengünstiges, einen vorteilhaften Berührschutz, insbesondere gegen elektrische Spannungen, bietendes Gehäuse erzielt werden kann.

In einer weiteren Ausgestaltung der Erfindung wird vorgeschlagen, dass die Absaugvorrichtung eine Motorlagereinheit mit einem Steckaufnahmebereich aufweist, wodurch eine besonders einfache und schnelle Montage und Demontage sowie Zentrierung der Motoreinheit erreicht werden können. Dabei soll unter einem "Steckaufnahmebereich" insbesondere ein Bereich verstanden werden, in oder auf den die Motoreinheit bei der Montage gesteckt und damit zumindest teilweise in ihrer Lage gesichert werden kann.

Ferner wird vorgeschlagen, dass die Absaugvorrichtung wenigstens ein Befestigungsmittel umfasst, das zur werkzeuglosen Befestigung der Motoreinheit vorgesehen ist, wodurch insbesondere der Aufwand der Montage und Demontage reduziert werden kann.

Umfasst die Absaugvorrichtung eine einen Berührschutz gewährleistende Steckverbindung zur Energieversorgung der Motoreinheit, kann konstruktiv einfach ein gewünschter Schutz erreicht werden, und es kann eine komfortable Montage und Demontage sichergestellt werden.

Ferner können der Komfort der Montage und Demontage weiter gesteigert und die Kosten weiter reduziert werden, wenn die Motoreinheit ein einen Berührschutz gewährleistendes Elektrokabel und ein daran befestigtes Steckmittel der Steckverbindung aufweist. Grundsätzlich könnte jedoch auch ein Steckmittel an das Gehäuse der Motoreinheit zumindest teilweise angeformt und/oder unmittelbar an diesem befestigt sein.

Ist in der Motoreinheit das Saugmittel integriert, wie beispielsweise ein Turbinenrad, eine Pumpe usw., kann eine aufwendige An- und Abkopplung der Motoreinheit an das Saugmittel bei der Montage und Demontage durch den Endverbraucher vermieden werden, und es kann eine kostengünstige Gesamteinheit erreicht werden.

Die erfindungsgemäße Lösung kann bei verschiedenen, dem Fachmann als hierzu geeignet erscheinenden Absaugvorrichtungen eingesetzt werden, jedoch vorteilhaft bei Dentalabsaugvorrichtungen und besonders vorteilhaft bei Zahntechnikabsaugvorrichtungen, und zwar insbesondere aufgrund des Betriebs derartiger Vorrichtungen nahezu im Dauereinsatz.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Zahntechnikabsaugvorrichtung in einer Seitenansicht mit einer teilweise ausgeblendeten Seitenwand,
- Fig. 2: eine räumliche Darstellung der Zahntechnikabsaugvorrichtung mit ausgeblendeten Teilen,
- Fig. 3: einen Querschnitt durch die Zahntechnikabsaugvorrichtung,
- Fig. 4: die Zahntechnikabsaugvorrichtung schräg von hinten bei der Montage einer Motoreinheit,
- Fig. 5: einen vergrößerten Ausschnitt der Zahntechnikabsaugvorrichtung von hinten und
- Fig. 6: einen vergrößerten Ausschnitt des Querschnitts aus Figur 3.

### Beschreibung des Ausführungsbeispiels

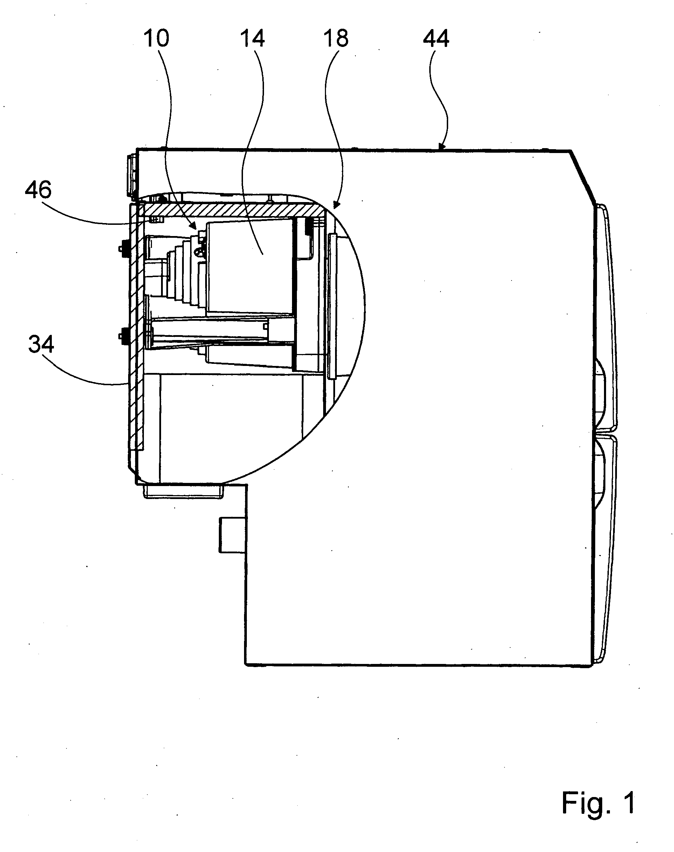

Figur 1 zeigt eine als Untertischgerät ausgebildete Zahntechnikabsaugvorrichtung in einer Seitenansicht mit einer teilweise ausgeblendeten Seitenwand. Die Zahntechnikabsaugvorrichtung ist zum Einsatz in einem Zahntechniklabor vorgesehen und weist in einem Vorrichtungsgehäuse 44 eine Motoreinheit 10 zum Antrieb eines in der Motoreinheit 10 integrierten, von einem Turbinenrad gebildeten Saugmittels 12 auf (Figuren 1, 3 und 6).

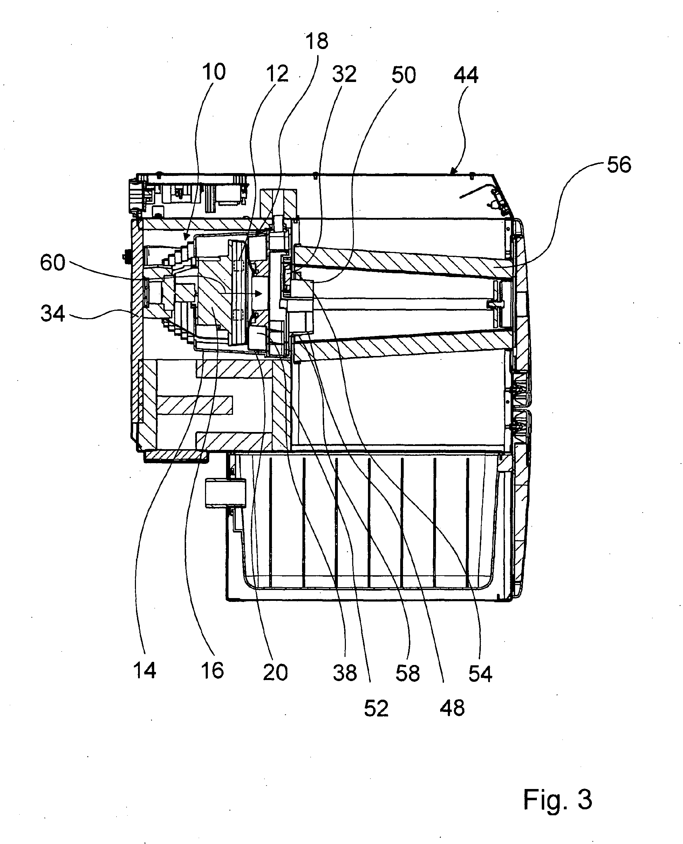

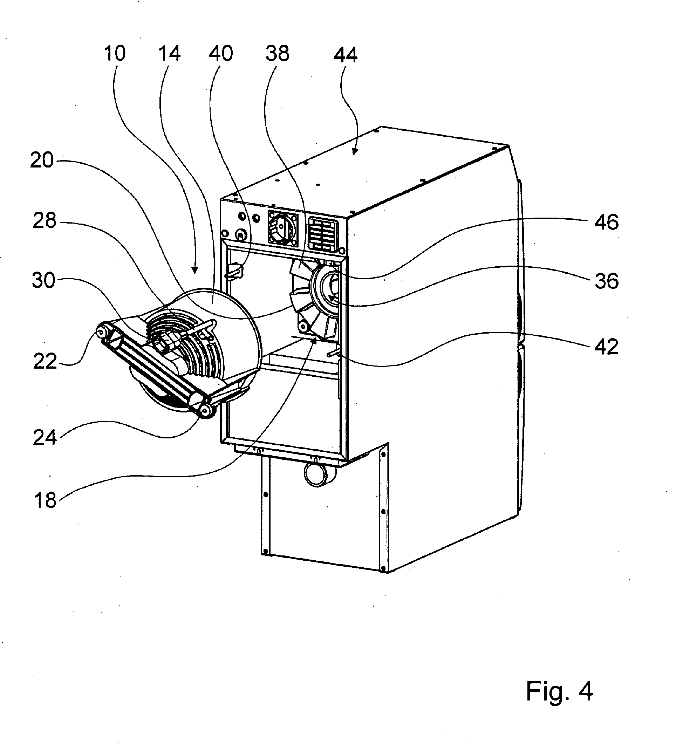

Die Motoreinheit 10 ist als eine von einem Endverbraucher austauschbare Einheit vorgesehen und weist hierfür ein Kunststoffgehäuse 14 und einen im Kunststoffgehäuse 14 angeordneten, von einem Kollektormotor gebildeten Elektromotor 16 auf (Figuren 3 und 4). Das Kunststoffgehäuse 14 bildet einen Berührschutz gemäß der DIN EN 61010-1.

Die Zahntechnikabsaugvorrichtung weist eine von einer Zwischengehäusebaueinheit gebildete Motorlagereinheit 18 mit einem Steckaufnahmebereich 20 auf, auf die die Motoreinheit 10 bei der Montage derselben mit ihrem Kunststoffgehäuse 14 aufgesteckt und damit zentriert wird. Die Motorlagereinheit 18 weist auf ihrer der Motoreinheit 10 zugewandten Seite sich ausgehend von einem Hauptströmungskanal 36 radial nach außen erstreckende, segmentförmige, gleichmäßig über den Umfang verteilte Ausformungen 38 auf, auf die die Motoreinheit 10 bei der Montage mit ihrem Kunststoffgehäuse 14 aufgesteckt wird und deren Außenumfangsflächen als Zentrierflächen dienen. Das Kunststoffgehäuse 14 ist hierfür auf der der Motorlagereinheit 18 zugewandten Seite im Wesentlichen zylinderförmig ausgebildet.

Ist die Motoreinheit 10 mit ihrem Kunststoffgehäuse 14 auf die Ausformungen 38 aufgesteckt, wird die Motoreinheit 10 mittels von Rändelmuttern gebildeten Befestigungsmitteln 22, 24, die zur werkzeuglosen Befestigung der Motoreinheit 10 vorgesehen sind, über Gewindebolzen 40, 42 an dem Vorrichtungsgehäuse 44 der Zahntechnikabsaugvorrichtung werkzeuglos befestigt. Anstatt Rändelmuttern sind jedoch auch andere, dem Fachmann als sinnvoll erscheinende werkzeuglose Befestigungsmittel denkbar, wie insbesondere Rastmittel und/oder Klemmmittel, Schnellspannverschlüsse usw.

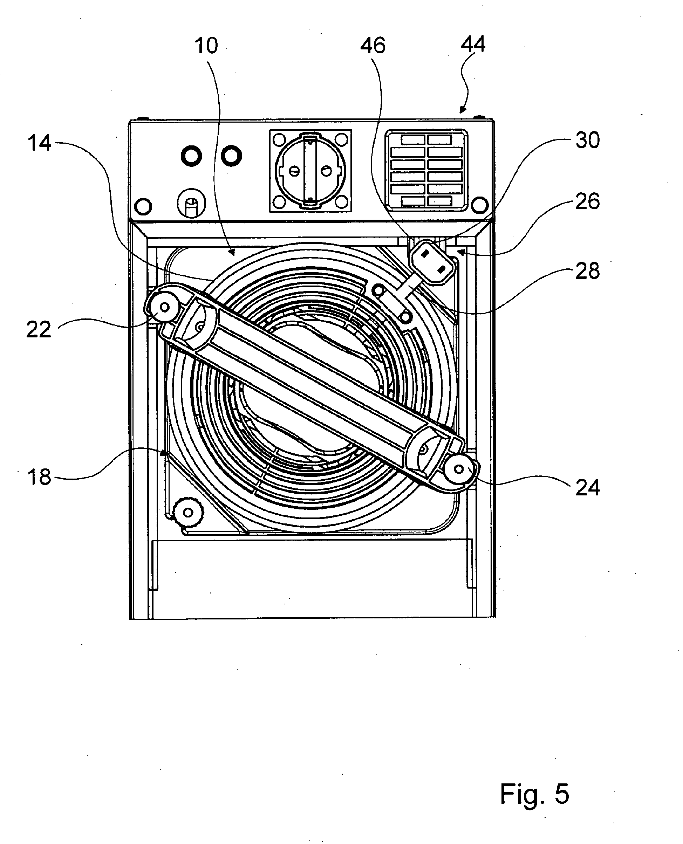

Ist die Motoreinheit 10 im Vorrichtungsgehäuse 44 befestigt, wird mittels einer einen Berührschutz gewährleistenden Steckverbindung 26 eine Energieversorgung der Motoreinheit 10 sichergestellt. Die Motoreinheit 10 weist hierfür ein einen Berührschutz gewährleistendes Elektrokabel 28 und ein daran befestigtes Steckmittel 30 der Steckverbindung 26 auf, das in ein am Vorrichtungsgehäuse 44 angeordnetes Steckmittel 46 eingesteckt wird (Figuren 4 und 5). Nachdem die Steckverbindung 26 hergestellt ist, wird das Vorrichtungsgehäuse 44 auf seiner Rückseite mit einem Deckel 34 verschlossen, der wiederum mit Befestigungsmitteln befestigt wird, die zur werkzeuglosen Befestigung vorgesehen sind.

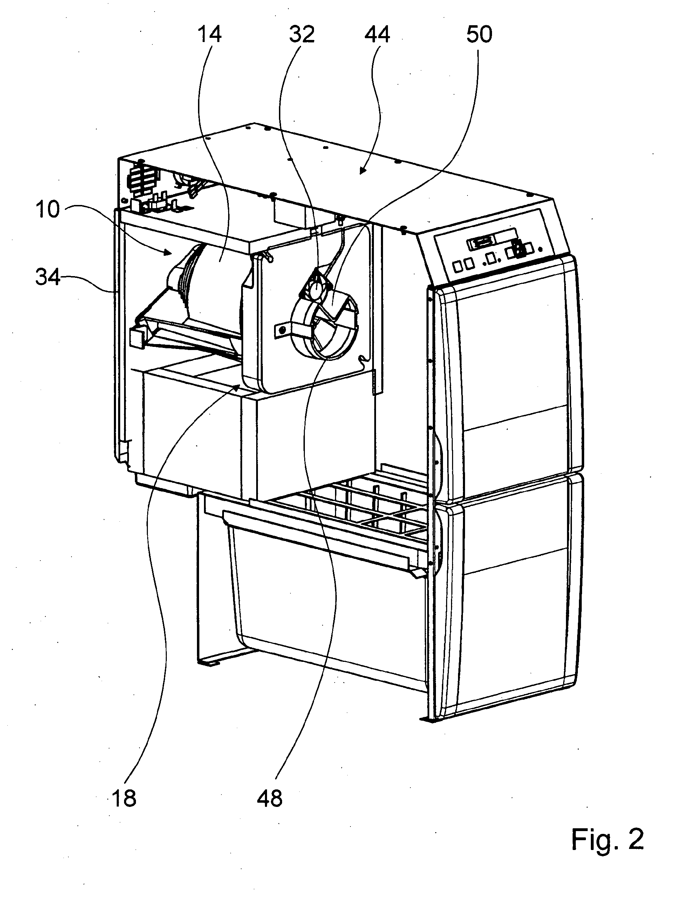

Die Motorlagereinheit 18 ist in axialer Richtung 60 zweiteilig ausgeführt und weist auf einer der Motoreinheit 10 abgewandten Seite einen Fortsatz 48 auf, der über einen ersten Winkelbereich einen im Wesentlichen ringsegmentförmigen Querschnitt und über einen zweiten Winkelbereich einen im Wesentlichen V-förmigen Querschnitt aufweist, und zwar, indem der Fortsatz 48 eine V-förmige Einbuchtung 50 aufweist (Figur 2).

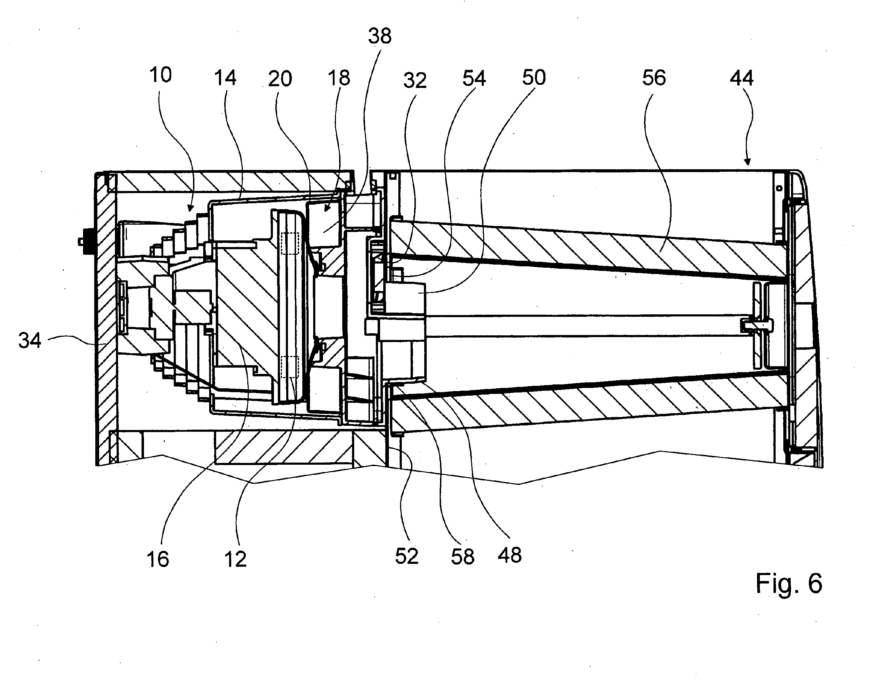

Der Fortsatz 48 ragt durch eine Blechwand 52 mit einer kreisrunden Ausnehmung 54. Hierbei ist zu bemerken, dass die Blechwand 52 in Figur 2 zur Veranschaulichung ausgeblendet ist, jedoch insbesondere in Figur 6 dargestellt ist. Auf einer der Motoreinheit 10 abgewandten Seite der Blechwand 52 ist auf den Fortsatz 48 ein Feinfilter 56 aufgesteckt, der mittels eines Zentrierbunds 58 auf dem Fortsatz 48 zentriert ist (Figur 6).

Die Zahntechnikabsaugvorrichtung weist eine einen Kleinlüfter 32 umfassende Strömungsmessvorrichtung auf, wobei der Kleinlüfter 32 zum Einsatz in einem PC vorgesehen ist bzw. aus dem PC-Anwendungsbereich stammt. Der Kleinlüfter 32 ist in der Motorlagereinheit 18 angeordnet, und zwar im Bereich der V-förmigen Einbuchtung 50. Der Kleinlüfter 32 wird teilweise von der Blechwand 52 abgedeckt und ragt teilweise in den Hauptströmungskanal 36, und zwar mit einer durch die V-förmige Einbuchtung 50 bestimmten Querschnittsfläche eines Kreissegments.

Der Kleinlüfter 32 ist während des Betriebs der Zahntechnikabsaugvorrichtung mittels seiner eigenen, von einem kleinen Elektromotor gebildeten Antriebseinheit angetrieben. Am Elektromotor des Kleinlüfters 32 wird zur Strömungsmessung ein Signal abgegriffen.

### Bezugszeichen

| | | | |
|---|---|---|---|
| 10 | Motoreinheit | 52 | Blechwand |
| 12 | Saugmittel | 54 | Ausnehmung |
| 14 | Gehäuse | 56 | Feinfilter |
| 16 | Elektromotor | 58 | Zentrierbund |
| 18 | Motorlagereinheit | 60 | Richtung |
| 20 | Steckaufnahmebereich | | |
| 22 | Befestigungsmittel | | |
| 24 | Befestigungsmittel | | |
| 26 | Steckverbindung | | |
| 28 | Elektrokabel | | |
| 30 | Steckmittel | | |
| 32 | Kleinlüfter | | |
| 34 | Deckel | | |
| 36 | Hauptströmungskanal | | |
| 38 | Ausformung | | |
| 40 | Gewindebolzen | | |
| 42 | Gewindebolzen | | |
| 44 | Vorrichtungsgehäuse | | |
| 46 | Steckmittel | | |
| 48 | Fortsatz | | |
| 50 | Einbuchtung | | |

## Patentansprüche

1. Absaugvorrichtung, insbesondere Dentalabsaugvorrichtung, mit wenigstens einer Motoreinheit (10) zum Antrieb eines Saugmittels (12),
**gekennzeichnet durch**
eine einen Kleinlüfter (32) umfassende Strömungsmessvorrichtung.

2. Absaugvorrichtung nach Anspruch 1,
**dadurch gekennzeichnet, dass** der Kleinlüfter (32) zum Einsatz in einem PC vorgesehen ist.

3. Absaugvorrichtung nach Anspruch 1 oder 2,
**dadurch gekennzeichnet, dass** der Kleinlüfter (32) in zumindest einem Betriebsmodus angetrieben ist.

4. Absaugvorrichtung nach einem der Ansprüche 1 bis 3,
**dadurch gekennzeichnet, dass** der Kleinlüfter (32) teilweise von einer Hauptströmung abgeschirmt ist.

5. Absaugvorrichtung nach einem der Ansprüche 1 bis 4,
**dadurch gekennzeichnet, dass** der Kleinlüfter (32) in einer Motorlagereinheit (18) angeordnet ist.

6. Absaugvorrichtung nach einem der vorhergehenden Ansprüche,
**dadurch gekennzeichnet, dass** die Motoreinheit (10) als eine von einem Endverbraucher austauschbare Einheit vorgesehen ist.

7. Absaugvorrichtung nach Anspruch 6,
**dadurch gekennzeichnet, dass** die Motoreinheit (10) ein Gehäuse (14) und einen im Gehäuse (14) angeordneten Elektromotor (16) aufweist.

8. Absaugvorrichtung nach Anspruch 7,
**dadurch gekennzeichnet, dass** das Gehäuse (14) einen Berührschutz bildet.

9. Absaugvorrichtung nach Anspruch 7 oder 8,
**dadurch gekennzeichnet, dass** das Gehäuse (14) zumindest teilweise aus Kunststoff ist.

10. Absaugvorrichtung nach einem der vorhergehenden Ansprüche,
**dadurch gekennzeichnet, dass** die Motoreinheit (10) einen Kollektormotor aufweist.

11. Absaugvorrichtung nach einem der vorhergehenden Ansprüche,
**gekennzeichnet durch** eine Motorlagereinheit (18) mit einem Steckaufnahmebereich (20) für die Motoreinheit (10).

12. Absaugvorrichtung nach einem der vorhergehenden Ansprüche,
**gekennzeichnet durch** wenigstens ein Befestigungsmittel (22, 24), das zur werkzeuglosen Befestigung der Motoreinheit (10) vorgesehen ist.

13. Absaugvorrichtung nach einem der vorhergehenden Ansprüche,
**gekennzeichnet durch** eine einen Berührschutz gewährleistende Steckverbindung (26) zur Energieversorgung der Motoreinheit (10) .

14. Absaugvorrichtung nach Anspruch 13,
**dadurch gekennzeichnet, dass** die Motoreinheit (10) ein einen Berührschutz gewährleistendes Elektrokabel (28) und ein daran befestigtes Steckmittel (30) der Steckverbindung (26) aufweist.

15. Absaugvorrichtung nach einem der vorhergehenden Ansprüche,
**dadurch gekennzeichnet, dass** in der Motoreinheit (10) das Saugmittel (12) integriert ist.
